# EUROPEAN PATENT SPECIFICATION

(11) **EP 4 416 416 B1**
(45) Date of publication and mention of the grant of the patent: **10.09.2025**
(21) Application number: 22802247.1
(22) Date of filing: 05.10.2022
(51) Int. Cl.: F16K 11/16, F16K 31/524, F16K 31/04, F16K 37/00

(54) **DRIVE TRIGGERING ASSEMBLY FOR A ROTARY VALVE BLOCK AND A ROTARY VALVE BLOCK**
ANTRIEBSAUSLÖSEANORDNUNG FÜR EINEN DREHVENTILBLOCK UND DREHVENTILBLOCK
ENSEMBLE DE DÉCLENCHEMENT D'ENTRAÎNEMENT POUR BLOC DE SOUPAPES ROTATIF, ET BLOC DE SOUPAPES ROTATIF

(30) Priority: 15.10.2021 PL 43923221
(43) Date of publication of application: 21.08.2024
(73) Proprietor: Szrom, Marcin, 02-172 Warszawa (PL)
(72) Inventor: PLUTA, Krzysztof, 04-029 Warszawa (PL); SZROM, Marcin, 02-172 Warszawa (PL)
(74) Representative: JWP Patent & Trademark Attorneys
(86) International application number: PCT/IB2022/059494
(87) International publication number: WO 2023/062480

(56) References cited:
- US-A- 1 549 490
- US-A1- 2021 062 687

## Description

The subject of the invention is the drive triggering assembly being a part of a rotary valve block and a rotary valve block. This kind of a valve block with a triggering assembly controlled with a single drive allows for activation in any sequence of any number of valves simultaneously in hydraulic, pneumatic systems.

There are known design solutions of valve blocks comprising systems of at least two valves connected with a mutual intake system. Triggering mechanisms in such solutions of starting, activating a valve are located in each valve, e.g. a solenoid or other mechanisms. The existing solutions of rotary valves do not allow for activation of flow ducts in a programmed volume and sequences using a single drive.

Document US1549490A discloses a mixing valve for fluids comprising a drive triggering assembly according to the preamble of claim 1.

Document US2021/062687A1 discloses a valve assembly including one or more poppet valves.

From document DE102017213663 a solution for a rotary valve block is known, i.e. a valve device for technical fluids with at least one rotary slide valve and a servo motor, whereby the rotary slide valve is placed in a rotary housing and has a rotary valve, which can be driven by means of a drive shaft by means of an actuator. The invention concerns also the method of operation of a valve device propelled with fluid. In the device there are mechanisms that actuate the slide valves and are mounted on a mutual shaft. Sliding out of a movable element (pin) is necessary for activation with use of an additional drive (in this case it is an electric drive). Thus, for operation of this solution at least two drives are necessary (shaft rotation and sliding out of the pin).

Document DE102017203563 presents an invention concerning a valve system comprising at least two single valve segments, a rotary slide segment and a housing segment supplied as modules for each single valve segment, whereby the valve system is composed of at least two separate valve sections. Design of the valve block indicated in the document enables actuation of the valve in a specific sequence. The sequence is encoded by the shape of a cam placed on a rotary cylinder. Changing of the valve operation sequence to another one requires mechanical changeover of the valve block (exchange of the rotary cylinder).

Document DE102016004705 describes the design of the valve block allowing for selection of the actuated slide valve. This solution concerns adjustment device for a selective choice of the rotary adjustment elements located in a cylindrical bay of the housing in the axial direction of the bay, including an internal shaft. The hollow shaft has a double shaft, whereby the internal arbor of the hollow shaft is connected so that it is in angular dependence on the internal shaft rotation. The hollow shaft can be moved in sliding positions corresponding to the number of actuators, whereby these actuators have internal teeth and are placed on the hollow shaft. Selection of a valve is effected by an independent rotation and setting of positions of two shafts, thus it is not necessary to make a mechanical changeover of the valve block in case of a change of the sequence, that is, the order of valve operation. The solution requires the use of two drives for operation.

Document WO08022370 describes a rotary valve including an input shaft which can rotate in a sleeve. Each input shaft and a sleeve have a system of longitudinal slots which are displaced together creating numerous parallel hydraulic bridges. The system of slots in the sleeve or on the shaft is evenly distributed around the sleeve axis, whereby the slots appear alternately between the slots of the first and the second type. The first type of the slot is connected to the fluid supply. The second type of the slot is elongated in order to ensure the return of the fluid and the slot of the second type is narrower than the slot of the first type. A solution of a rotary device is presented where the flow of the medium is realized by proper mutual positioning of the flow holes. The system ensures a sequential, one after another, hydraulic connection depending on the angular positioning of the system which does not ensure any sequence, order and number of valve operation selection.

Document JP1195978 presents a solution of a valve with pistons placed cylindrically on the circumference of the system, which are actuated using a rotary cam. The rotor cam, with which is interlocked the rotary shaft having both the piston and cylinders extending radially from the centre of the said rotor cam. The rotor valves have the same common rotary shaft as the rotor cam and they rotate in the same cycle as the cam. The system does not provide the functionality of the control of the sequence and the number of valve actuation.

Among the known solutions concerning design of valves and their control no solution was found, in which the full functionality was obtained using a single drive without the necessity of the mechanical changeover. These solutions do not ensure free choice of the sequence of the valve operation. In the existing solutions, which ensure this, the mechanisms of valve triggering, starting, actuation are located on each valve, as e.g. a solenoid or other mechanisms, or they require several independent drives. It results from the requirement of actuation during the operation of the particular valves - single or in groups.

The purpose of the invention is to provide a common trigger mechanism for a group of valves. The purpose of the invention is to provide a solution, in which a change of the sequence and number of operating valves does not require mechanical change-over. The purpose is to provide full functionality and sequentiality changes obtained with the use of a single drive. This objective was achieved by the drive triggering assembly being a part of a rotary valve block and a rotary valve block including a drive triggering assembly. Such a rotary valve block with a triggering assembly controlled by a single drive allows to activate any number of valves in any sequence simultaneously. Triggering, starting and actuation of the valves takes place individually or in groups using a single triggering device for a valve block. The particular valves may be in the circular or linear layout or in mixed circular-linear layout. Within the solution any number of valves, as well as of their actuating fingers may be used.

The invention relates to the drive triggering assembly being a part of a rotating valve block, in which there are consecutively mounted: a drive motor with drive motor shaft, on which there is the first rotor mounted having at least one arbor fixing element, on which at least one actuating finger is seated, characterized in that the first rotor has at least one rod driver, by which the second rotor is driven, whereby further along the axis there is a second rotor having at least one angular recess and being mounted on a unidirectional bearing, simultaneously on the second rotor there is at least one arbor fixing element, motion-connected with actuating fingers via a longitudinal through-recess forming a guide in the actuating finger.

Preferably, the actuating finger has a fixing hole, whereas on the first rotor there are arbor fixing elements and there are arbor fixing elements on the second rotor, whereby the first arbor fixing elements are located in different distance from the common axis compared to the second arbor fixing elements, whereby the actuating fingers are motion-connected with the first rotor using the arbor fixing elements and with the second rotor using the arbor fixing elements.

Preferably, the arbor fixing elements are driveable connected with the second rotor via actuating fingers.

Preferably, the arbor fixing elements have round cross section and are placed along the axis of the output drive shaft.

Preferably, there is at least one actuating finger on a pair of the arbor fixing elements.

Preferably, it has one drive motor.

Preferably, the drive motor is located essentially coaxial with the common axis.

Preferably, the angular positions of location of the arbor fixing elements are such that the valves of the rotary valve block are actuated separately or in groups by a single drive motor according to the indicated sequence and number.

Preferably, the rod drivers of the first rotor are driveable connected with the second rotor. The invention also relates to a rotary valve block including a drive triggering assembly as defined, having a through-hole housing, forming an internal common chamber closed with a cover with at least one valve placed essentially circumferential in the housing, whereby the drive triggering assembly is fixed in the housing so that one or more actuating fingers actuate one or more valves, where the cover has a fixed shaft, on which a unidirectional rotor bearing is seated. Preferably, the housing has a common chamber for the drive triggering assembly, which is sealed with a seal located under the cover.

Preferably, the housing has inlet for the medium into the common chamber, whereby the housing on the side of the common chamber has one or more holes going into one or more chambers for the valves.

Preferably, the valves are located in a circular or linear or a circular-linear arrangement.

The advantage of the invention is that it allows for an effective valve control using just a single drive, what ensures ease of use and economy thanks to easy and fast programming of valve starting sequences.

The subject of the invention in an embodiment is shown in the drawing, wherein:
- fig. 1 - represents the drive triggering assembly in the perspective exploded views on both sides of the assembly,
- fig. 2 - represents the cross section and perspective views of the drive triggering assembly in the pushed-in position,
- fig. 3 - represents the cross section and perspective views of the drive triggering assembly in the pulled-out position,
- fig. 4 - represents the perspective view of the drive triggering assembly with linearly arranged valves,
- fig. 5 - represents the exploded perspective view of the rotary valve block with the drive triggering assembly,
- fig. 6 - represents the perspective view of the rotary valve block and its side view as well as the cross-sectional view A-A of the rotary valve block with the drive triggering assembly,
- fig. 7 - represents the segment of the cross-section view of the valve block with the drive triggering assembly, and
- fig. 8 - represents the perspective view, plans and the cross-section view of a single valve of the rotary valve block.

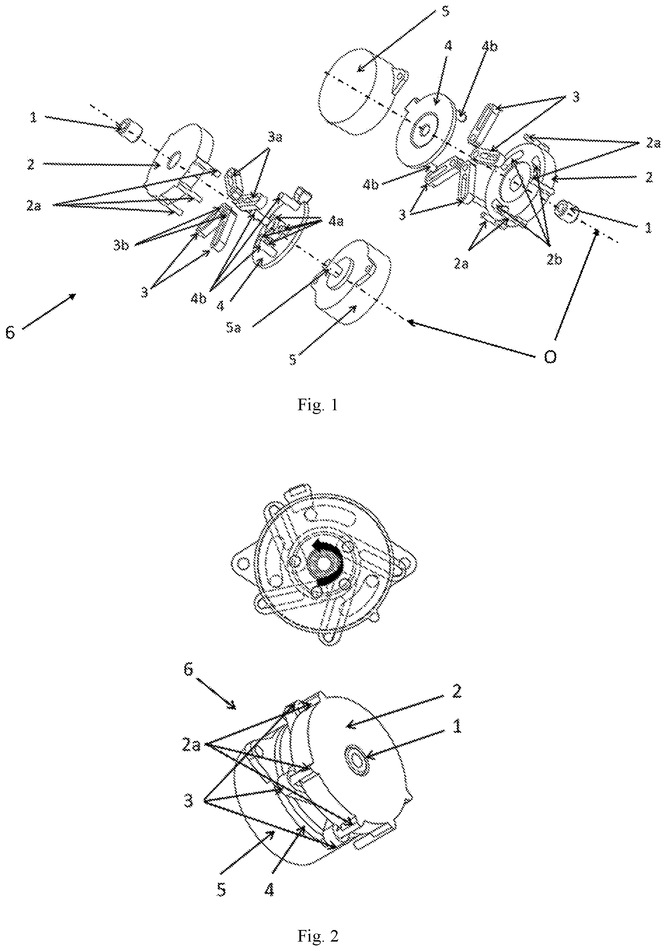

The embodiment of the invention of the drive triggering assembly visible on fig. 1 presents the drive triggering assembly 6 being a part of the rotary valve block, in which on the common axis O the following elements are located: the drive motor 5 with the motor drive shaft 5a. The drive motor 5 has a housing with mounting grips that allow for its firm fixing in the valve block. In an alternative embodiment, the drive motor 5 may be located in an offset from the axis O via a toothed gear, belt gear and others, which is obvious for skilled in the art. On the drive shaft 5a there is the first rotor 4 fixed having the arbor fixing element 4a. In alternative embodiments there are two, three, four or more arbor fixing elements depending on the demand. The arbor fixing element 4a is located on the rotor 4 in the so that it comes out essentially perpendicularly from rotor surface essentially parallel to the axis O. The arbor fixing elements 4a are placed closer to the centre of rotor 4 than the arbor fixing elements 2a on the second rotor 2. The three actuation fingers 3 are mounted on the arbor fixing element 4a. In alternative embodiments there can be one or more actuation fingers 3.

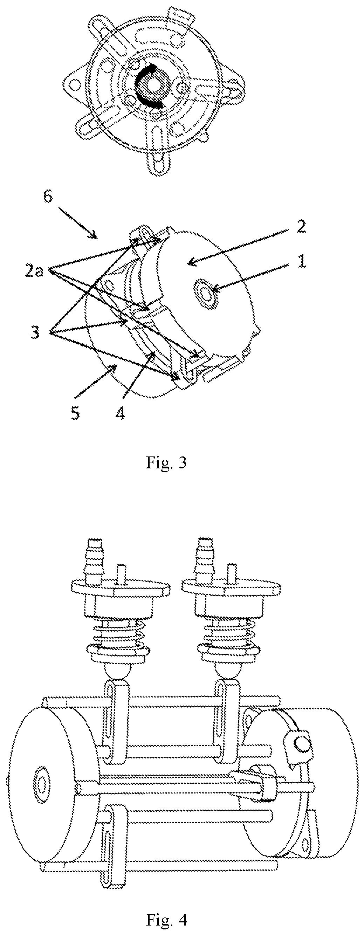

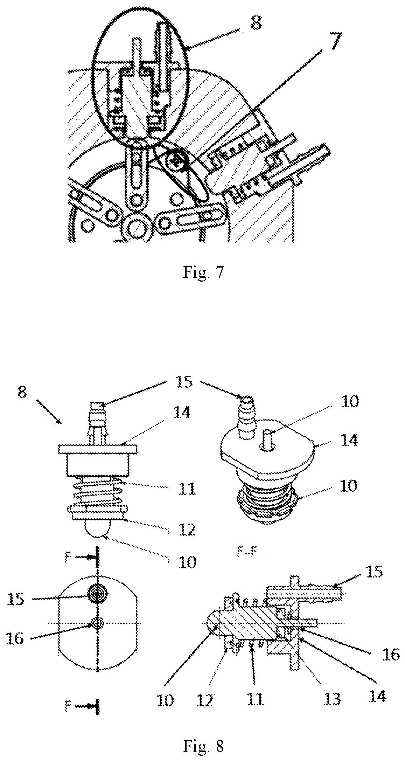

The first rotor 4 has also at least one rod driver 4b moving along the angular recesses 2b on the second rotor 2. The rod drivers 4b reach the second rotor 2. The second rotor 2 is located further along the axis O, with the unidirectional bearing 1 fixed in it. The unidirectional bearing 1 is inserted into the central hole of the second rotor 2 on the common axis O. The second rotor 2 has the three angular recesses 2b. In alternative embodiments there can be one or more angular recesses 2b. On the second rotor 2 there is at least one arbor fixing element 2a with motion connection to the actuating fingers 3 via the longitudinal through-recess forming the guide 3a in the actuating finger 3. The arbor fixing elements 2a are located essentially perpendicularly on the second rotor 2 and parallel to the mutual axis O and they are directed essentially towards the rotor 4, as it is presented on fig. 1 and fig. 2. In alternative embodiments there can be two, three, four or more arbor fixing elements depending on the number of the actuating fingers 3. The actuating finger 3 has essentially elongated rectangular shape with round ends. The actuating finger 3 has the fixing hole 3b at the first end and a longitudinal through-recess forming the guide 3a running from the second end of the actuating finger 3, whereby the second end of the actuating finger 3 actuates the valve 8 visible on fig. 8. The first end of the actuating finger 3 mounted on the arbor fixing element 4a of the rotor 4 is located closer to the common axis O, and so also the arbor fixing elements 4a are located in different distance from the common axis O compared to the arbor fixing elements 2a. The actuating fingers 3 are motion-connected with the first rotor 4 using the arbor fixing elements 4a and with the second rotor 2 using the arbor elements 2a, through which also the arbor fixing elements 2a are driveable connected with the second rotor 2 via the actuating fingers 3. The arbor fixing elements 4a have a circular cross section and are placed on the surface of rotor 4 in the longitudinal position with respect of the axis O of the initial drive shaft 5a. On fig.1 and fig.2 and fig.3 it is visible that on the pair of arbor fixing elements 2a, 4a there is at least one actuating finger 3. The first rotor 4 and the second rotor 2 have an essentially circular shape. The drive triggering assembly 6 has one driving motor 5 located on the common axis O, whereby the housing of the drive motor 5 has an essentially circular shape. The angular positions of the locations of the arbor fixing elements 2a, 4a are such that the valves 8 of the rotary valve block are actuated individually or in groups via the single driving motor 5, according to the indicated sequence and number. Setting of the particular actuating fingers 3 in the axes of the selected valves 8 causes activation of the valves 8 after extending the fingers 3. In an alternative embodiment, the actuating fingers 3 can be located side by side along the axis O as it is demonstrated on fig.4. In the alternative embodiment at least one individual arbor fixing element 2a, 4a is extended sufficiently to enable locating two or more actuating fingers 3 located side by side on it - linearly along the common axis O, as well as in another alternative embodiment the actuating fingers can be mounted radially around the axis O.

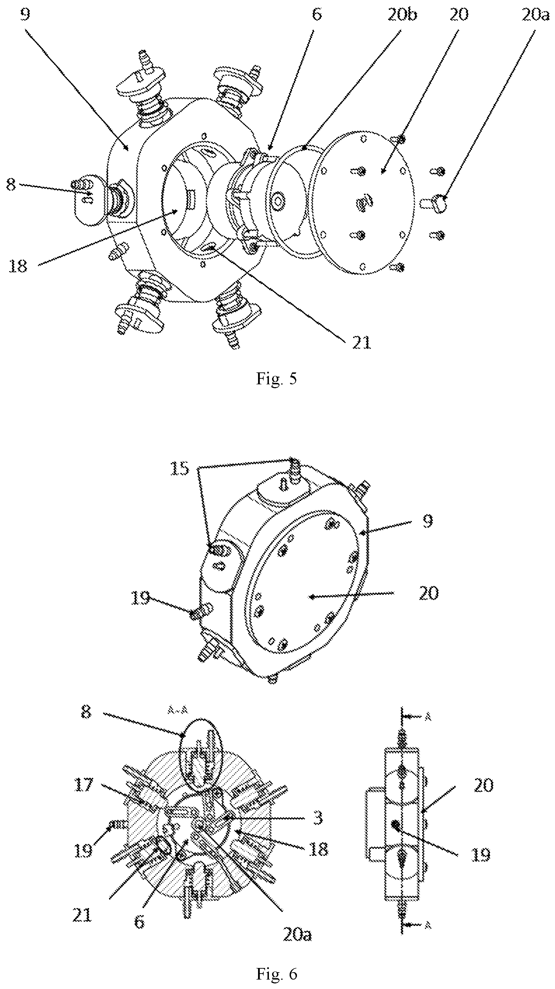

In the embodiment visible on fig. 5 the rotating valve block, which includes the drive triggering assembly 6 described above, has the through-hole housing 9. The housing 9 has the through space which forms the internal common chamber 18. Inside the housing 9, outside the common chamber 18, there are located valve chambers 17, in which the valves 8 are placed. The common chamber 18 is shielded with the sealed cover 20 of the valve block. The drive triggering assembly 6 is mounted in the housing 9 inside the mutual chamber 18. Fastening means in the form of tabs with holes for screw connections have been also provided, ensuring effective securing of the drive triggering assembly 6 in the housing 9. The housing 9 with the drive triggering assembly 6 has the cover 20, which tightly seals the housing 19 using the seal 20b. It is fixed with detachable screw-type means. The cover 20 has in the central part a mounting place for an unidirectional bearing 1 of the stationary shaft 20a so, that at least one activating finger 3 activates one of the valves 8. Moreover, the unidirectional bearing 1 is used, mounted on its inner race on the stationary shaft 20a, which is locked in the cover 20. The common chamber 18 is sealed with the seal 20b located under the cover 20. The housing 9 has the stub pipe 19 for the medium, connected with the common chamber 18. As it can be seen on fig. 6 and 7, inside the housing 9 from the side of the common chamber 18 there is at least one hole 21 passing through the walls of the housing 9 to the six chambers 17, whereby in the alternative embodiments there can be one or more chambers 17, protruding from outer walls of the housing 9, in which the valves 8 are mounted.

Operation of the valve block is ensured by supplying of the working medium i.e., gas or liquid, which is delivered to the valve block through the inlet stub pipe 19. The mechanical arrangement of the movable elements - the actuating fingers 3 allows for starting, actuation of the particular valves 8 in the given operation algorithm, i.e. in the sequence or in the number and is positioned by the drive triggering assembly 6 and controlled with one electric motor 5. Distances between movable actuating fingers 3, were designed in such a way that they allow for arbitrary selection of at least one valve 8 or some valves 8 for actuation in the particular step of the process. The movable elements - actuating fingers 3 which do not take part in the valve actuation position themselves in the area 7 between the valves 8. As a result of actuation of the valve 8, the working medium escapes out of the valve block via the stub pipe 15 feeding the executive device. The drive triggering assembly 6 does not require additional dedicated drive for extending the actuating fingers 3. Arrangement of the first rotor 4 and the second rotor 2 located in one axis where the first rotor 4 is seated on the shaft of the electric motor 5a and the second rotor 2 is seated on the unidirectional bearing 1, the shaft 20a of which is stationary. Between the first rotor 4 and the second rotor 2, there are movable elements - the actuating fingers 3, so that a rotation of the drive triggering assembly 6 in one direction causes hiding of the actuating fingers 3 and enables setting of their expected position in relation to the triggered valves 8 so as to actuate the valve 8 or more valves 8 according to the given sequence and number. Changing the direction of rotation of the shaft 5a of the motor drive 5 causes immobilization of the rotor 2 by the unidirectional bearing 1 and as a result extending of the fingers 3, which results in actuation of the valve 8 or a group of valves 8. The drive triggering assembly 6 with retracted actuating fingers 3 is demonstrated on fig 2, while fig. 3 demonstrates the drive triggering assembly 6 with extended actuating fingers 3.

An embodiment of such implementation is the six-valve rotary pneumatic block of valves equipped with the distribution valves 8 type 3/2 as demonstrated on fig. 5 and fig. 6. In this embodiment, a system with four activating fingers 3 is used allowing in the particular step of the operation sequence of the valve block for the actuation of one or two consecutive or two every other valves 8 simultaneously. In the housing 9 six chambers 17 are located, in which the valves 8 are placed. Each of the valves 8 demonstrated on fig. 8 includes the sliding stem 10, pressing spring 11, sealing element 12, sealing elements 13 and cover 14 with outlet stud pipe 15 and vent hole 16. The sealing element 12 is responsible for separation of the chamber 17 of the valve 8 from the common chamber 18 of the valve block in the inactive state of the valve 8. The sealing element 13 is responsible for closing of the vent hole 16 in the active state of the valve 8. In the active state the sliding element 10 is pushed out by the actuating finger 3, opening the connection between the valve chamber 17 and the common chamber 18 of the block allowing for the flow of the medium through the outlet stub pipe 15. In the inactive state the vent hole 16 is open so that the pressurized medium from the receiver is discharged from the inside of the valve block. In the housing 9 between the common chamber 18 and the inlet stub pipe 19 there is an inlet channel allowing for delivering the medium from outside using e.g. an external pump constituting medium supply to the common chamber 18 of the valve block. In the common chamber 18 is located the drive triggering assembly 6 as it is visible on fig.5. The motor drive 5 is permanently fixed to the valve block housing 9 inside the common chamber 18 of the valve block. The drive triggering assembly 6 according to fig.1 includes the rotor 4 and the rotor 2, four actuating fingers 3, the motor drive 5 and the unidirectional bearing 1. The unidirectional bearing 1 is permanently press-fixed to the second rotor 2. Moreover, in the mutual chamber 18 there are six holes 21 connecting it with the particular chambers 17 of the valves 8. Another element of the valve block is the tightly sealed with the seal 20b cover 20 of the valve block, in which the stationary shaft 20a is mounted, on which the unidirectional bearing 1 of the drive triggering assembly 6 is placed. The motor drive 5 of the drive assembly 6 is controlled by an electronic system, which enables the control of the angle and rotation direction of the shaft 5a of the motor drive 5.

The rotary valve block and drive triggering assembly have their industrial application for valve control in the field of hydraulics and pneumatics.

### List of references

1. Unidirectional bearing
2. Second rotor of the triggering assembly
2a. Arbor fixing element on the second rotor
2b Angular recess on the second rotor
3. Actuating finger
3a. Longitudinal through-recess in the actuating finger
3b. Fixing hole
4. First rotor of the triggering assembly
4a. Arbor fixing element on the first rotor
4b. Rod driver on the first rotor
5. Drive motor
5a. Motor drive shaft
6. Drive triggering assembly
7. Area between valves
8. Valve in the valve block
9. Valve block housing
10. Valve sliding stem
11. Pressing spring
12. Sealing element
13. Sealing element
14. Cover of the 3/2 valve
15. Outlet stud pipe
16. Vent hole of the 3/2 valve
17. Valve chamber
18. Common chamber of the valve block
19. Inlet stud pipe of the valve block
20. Cover of the valve block
20a. Stationary shaft of unidirectional bearing
20b. Cover seal
21. Connecting hole

## Claims

1. A drive triggering assembly (6), for a rotary valve block, wherein in the drive triggering assembly (6) the following elements are located consecutively along an axis (O) : a drive motor (5) with a drive shaft (5a) of the drive motor (5), on the drive shaft (5a) a first rotor (4) is fixed, which has at least one first arbor fixing element (4a), on the at least one first arbor fixing element (4a) at least one actuating finger (3) is seated, **characterized in that** the first rotor (4) has at least one rod driver (4b), wherein with the at least one rod driver (4b) a second rotor (2) is driven, wherein further along the axis (O) the second rotor (2) with at least one angular recess (2b) is located and it is seated on an unidirectional bearing (1), simultaneously on the second rotor (2) at least one second arbor fixing element (2a) is located, motion-connected with the at least one actuating finger (3) via a longitudinal through-recess forming a guide (3a) in the at least one actuating finger (3).

2. A drive triggering assembly (6) according to claim 1, **characterized in that** the actuating finger (3) has a fixing hole (3b), wherein on the first rotor (4) the at least one first arbor fixing element (4a) is located and on the second rotor (2) the at least one second arbor fixing element (2a) is located, wherein the first arbor fixing element (4a) is located at different distance from the common axis (O) compared to the at least one second arbor fixing element (2a), wherein the actuating fingers (3) are motion-connected with the first rotor (4) using the at least one arbor fixing element (4a) and with the second rotor (2) using the at least one second arbor fixing element (2a).

3. A drive triggering assembly (6) according to any of claims 1 to 2, **characterized in that** the at least one first arbor fixing element (4a) is drive-connected with the second rotor (2) through the at least one actuating finger (3).

4. A drive triggering assembly (6) according to any of claims 1 to 3, **characterized in that** the at least one first arbor fixing element (4a) has circular cross section and is located in a longitudinal position with respect to the axis (O) of the drive shaft (5a).

5. A drive triggering assembly (6) according to any of claims 1 to 4, **characterized in that** the at least one actuating finger (3) is placed on a first arbor fixing element (4a) and a second arbor fixing element (2a).

6. A drive triggering assembly (6) according to any of claims 1 to 5, **characterized in that** it has only one drive motor (5).

7. A drive triggering assembly (6) according to any of claims 1 to 6, **characterized in that** the drive motor (5) is placed essentially co-axially with the common axis (O).

8. A drive triggering assembly (6) according to any of claims 1 to 7, **characterized in that** the angular positions of the first and second arbor fixing elements (2a, 4a) are such that, in use, valves (8) of the rotary valve block are actuated individually or in groups by the single drive motor (5) according to an indicated sequence and number.

9. A drive triggering assembly (6) according to any of claims 1 do 8, **characterized in that** the at least one rod driver (4b) of the first rotor (4) is drive-connected with the second rotor (2).

10. A rotary valve block including the drive triggering assembly (6) as defined according to any of claims 1 to 9, **characterized in that** it has a through-hole housing (9) creating an internal common chamber (18), shielded with a cover (20) with at least one valve (8) located essentially circumferential in the housing (9),wherein the drive triggering assembly (6) is fixed in the housing (9) so that one or more actuating fingers (3) actuate one or more valves (8) and wherein the cover (20) has a stationary shaft (20a), on which the unidirectional bearing (1) of the second rotor (2) is seated.

11. A rotary valve block according to claim 10, **characterized in that** the housing (9) has the common chamber (18) for the drive triggering assembly (6), the common chamber (18) is sealed with a seal (20b) located under the cover (20).

12. A rotary valve block according to any of claims 10 to 11, **characterized in that** the housing (9) has an inlet (19) for the medium into the common chamber (18), wherein the housing (9) from the side of the common chamber (18) has one or more holes (21) going into one or more chambers (17) for the at least one valve (8).

13. A rotary valve block according to any of claims 10 to 12, **characterized in that** the valves (8) are located in a circular or linear or a circular-linear arrangement.

## Patentansprüche

1. Eine Antriebsauslösebaugruppe (6) für einen Drehventilblock, wobei sich in der Antriebsauslösebaugruppe (6) die folgenden Elemente hintereinander entlang einer Achse (O) befinden: ein Antriebsmotor (5) mit einer Antriebswelle (5a) des Antriebsmotors (5), auf der Antriebswelle (5a) ein erster Rotor (4) befestigt ist, der mindestens ein erstes Dornbefestigungselement (4a) aufweist, auf dem mindestens einen ersten Dornbefestigungselement (4a) mindestens ein Betätigungsfinger (3) sitzt,
**dadurch gekennzeichnet, dass** der erste Rotor (4) mindestens einen Stangenmitnehmer (4b) aufweist, wobei mit dem mindestens einen Stangenmitnehmer (4b) ein zweiter Rotor (2) angetrieben wird, wobei sich weiter entlang der Achse (O) der zweite Rotor (2) mit mindestens einer Winkelausnehmung (2b) befindet und er auf einem unidirektionalen Lager (1) sitzt, gleichzeitig sich auf dem zweiten Rotor (2) mindestens ein zweites Dornbefestigungselement (2a) befindet, das mit dem mindestens einen Betätigungsfinger (3) über eine eine Führung (3a) in dem mindestens einen Betätigungsfinger (3) bildende Längsdurchgangsausnehmung bewegungsverbunden ist.

2. Eine Antriebsauslösebaugruppe (6) nach Anspruch 1, **dadurch gekennzeichnet, dass** der Betätigungsfinger (3) eine Befestigungsöffnung (3b) aufweist, wobei sich auf dem ersten Rotor (4) das mindestens ein erstes Dornbefestigungselement (4a) befindet und sich auf dem zweiten Rotor (2) das mindestens ein zweites Dornbefestigungselement (2a) befindet, wobei sich das erste Dornbefestigungselement (4a) in einem unterschiedlichen Abstand von der gemeinsam Achse (O) im Vergleich zu dem mindestens einen zweiten Dornbefestigungselement (2a) befindet, wobei die Betätigungsfinger (3) mit dem ersten Rotor (4) unter Verwendung des mindestens einen Dornbefestigungselements (4a) und mit dem zweiten Rotor (2) unter Verwendung des mindestens einen zweiten Dornbefestigungselements (2a) bewegungsverbunden sind.

3. Eine Antriebsauslösebaugruppe (6) nach einem der Ansprüche 1 bis 2, **dadurch gekennzeichnet, dass** das mindestens ein erstes Dornbefestigungselement (4a) mit dem zweiten Rotor (2) durch den mindestens einen Betätigungsfinger (3) antriebsverbunden ist.

4. Eine Antriebsauslösebaugruppe (6) nach einem der Ansprüche 1 bis 3, **dadurch gekennzeichnet, dass** das mindestens ein erstes Dornbefestigungselement (4a) einen kreisförmigen Querschnitt aufweist und sich in einer Längsposition in Bezug auf die Achse (O) der Antriebswelle (5a) befindet.

5. Eine Antriebsauslösebaugruppe (6) nach einem der Ansprüche 1 bis 4, **dadurch gekennzeichnet, dass** der zumindest eine Betätigungsfinger (3) auf ein erstes Dornbefestigungselement (4a) und ein zweites Dornbefestigungselement (2a) platziert ist.

6. Eine Antriebsauslösebaugruppe (6) nach einem der Ansprüche 1 bis 5, **dadurch gekennzeichnet, dass** sie nur einen Antriebsmotor (5) aufweist.

7. Eine Antriebsauslösebaugruppe (6) nach einem der Ansprüche 1 bis 6, **dadurch gekennzeichnet, dass** der Antriebsmotor (5) im Wesentlichen koaxial zu der gemeinsamen Achse (O) platziert ist.

8. Eine Antriebsauslösebaugruppe (6) nach einem der Ansprüche 1 bis 7, **dadurch gekennzeichnet, dass** die Winkelpositionen des ersten und des zweiten Dornbefestigungselements (2a, 4a) so sind, dass bei Verwendung die Ventile (8) des Drehventilblocks einzeln oder in Gruppen durch den einzelnen Antriebsmotor (5) gemäß einer angezeigten Reihenfolge und Anzahl betätigt werden.

9. Eine Antriebsauslösebaugruppe (6) nach einem der Ansprüche 1 bis 8, **dadurch gekennzeichnet, dass** der mindestens ein Stangenmitnehmer (4b) des ersten Rotors (4) mit dem zweiten Rotor antriebsverbunden (2) ist.

10. Ein Drehventilblock umfassend die Antriebsauslösebaugruppe (6) wie definiert nach einem der Ansprüche 1 bis 9, **dadurch gekennzeichnet, dass** er ein Durchgangsöffnungsgehäuse (9) aufweist, das eine mit einem Deckel (20) abgeschirmte interne gemeinsame Kammer (18) schafft, mit mindestens einem sich im Wesentlichen umlaufend in dem Gehäuse (9) befindenden Ventil (8), wobei die Antriebsauslösebaugruppe (6) so in dem Gehäuse (9) befestigt ist, dass ein oder mehrere Betätigungsfinger (3) ein oder mehrere Ventile (8) betätigen, und wobei der Deckel (20) eine stationäre Welle (20a) aufweist, auf der das unidirektionale Lager (1) des zweiten Rotors (2) sitzt.

11. Ein Drehventilblock nach Anspruch 10, **dadurch gekennzeichnet, dass** das Gehäuse (9) die gemeinsame Kammer (18) für die Antriebsauslösebaugruppe (6) aufweist, die gemeinsame Kammer (18) mit einer Dichtung (20b) abgedichtet ist, die sich unter dem Deckel (20) befindet.

12. Ein Drehventilblock nach einem der Ansprüche 10 bis 11, **dadurch gekennzeichnet, dass** das Gehäuse (9) einen Einlass (19) für das Medium in die gemeinsame Kammer (18) aufweist, wobei das Gehäuse (9) von der Seite der gemeinsamen Kammer (18) eine oder mehrere Öffnungen (21) aufweist, die in eine oder mehrere Kammern (17) für das mindestens ein Ventil (8) gehen.

13. Ein Drehventilblock nach einem der Ansprüche 10 bis 12, **dadurch gekennzeichnet, dass** sich die Ventile (8) in einer kreisförmigen oder linearen oder einer kreisförmig-linearen Anordnung befinden.

## Revendications

1. Ensemble de déclenchement d'entraînement (6), pour un bloc de soupapes rotatif, les éléments suivants étant disposés consécutivement situés le long de l'axe (O) dans l'ensemble de déclenchement d'entraînement (6) : un moteur d'entraînement (5) doté d'un arbre d'entraînement (5a) du moteur d'entraînement (5), arbre d'entraînement (5a) auquel un premier rotor (4) est fixé, qui présente au moins un premier élément de fixation d'arbre (4a), au moins le premier élément de fixation d'arbre (4a) sur lequel au moins un doigt d'actionnement (3) est placé, **caractérisé en ce que** le premier rotor (4) comprends au moins un dispositif d'entraînement de tige (4b), au moins un dispositif d'entraînement de tige (4b) entraînant un second rotor (2), plus loin le long de l'axe (O) le second rotor (2) doté d'au moins un évidement angulaire (2b) étant disposé et reposant sur un palier unidirectionnel (1), au moins un second élément de fixation d'arbre (2a) étant disposé simultanément sur le second rotor (2), et étant en raccordement de mouvement avec au moins un doigt d'actionnement (3) par l'intermédiaire d'un évidement transversant longitudinal formant un guide (3a) dans au moins le doigt d'actionnement (3).

2. Ensemble de déclenchement d'entraînement (6) selon la revendication 1, **caractérisé en ce que** le doigt d'actionnement (3) présente un orifice de fixation (3b), au moins le premier élément de fixation d'arbre (4a) étant disposé sur le premier rotor (4) et au moins le second élément de fixation d'arbre (2a) étant disposé sur le second rotor (2), le premier élément de fixation d'arbre (4a) étant disposé à une distance différente de l'axe commun (O) par rapport à au moins le second élément de fixation d'arbre (2a), les doigts d'actionnement (3) étant en raccordement de mouvement avec le premier rotor (4) en utilisant au moins le élément de fixation d'arbre (4a) et avec le second rotor (2) en utilisant au moins le second élément de fixation d'arbre (2a).

3. Ensemble de déclenchement d'entraînement (6) selon l'une quelconque des revendications 1 à 2, **caractérisé en ce qu'**au moins le premier élément de fixation d'arbre (4a) est en raccordement d'entraînement avec le second rotor (2) par l'intermédiaire d'au moins le doigt d'actionnement (3).

4. Ensemble de déclenchement d'entraînement (6) selon l'une quelconque des revendications 1 à 3, **caractérisé en ce qu'**au moins le premier élément de fixation d'arbre (4a) présente une section transversale circulaire et est disposé dans une position longitudinale relativement à l'axe (O) d'arbre d'entraînement (5a).

5. Ensemble de déclenchement d'entraînement (6) selon l'une quelconque des revendications 1 à 4, **caractérisé en ce qu'**au moins le doigt d'actionnement (3) est placé sur un premier élément de fixation d'arbre (4a) et un second élément de fixation d'arbre (2a).

6. Ensemble de déclenchement d'entraînement (6) selon l'une quelconque des revendications 1 à 5, **caractérisé en ce qu'**il présente un seul moteur d'entraînement (5).

7. Ensemble de déclenchement d'entraînement (6) selon l'une quelconque des revendications 1 à 6, **caractérisé en ce que** le moteur d'entraînement (5) est placé sensiblement de manière coaxiale avec un axe commun (O).

8. Ensemble de déclenchement d'entraînement (6) selon l'une quelconque des revendications 1 à 7, **caractérisé en ce que** les positions angulaires du premier et second élément de fixation d'arbre (2a, 4a) sont de telle sorte que, en fonctionnement, les soupapes (8) du bloc de soupapes rotatif sont actionnées individuellement ou par groupes par le moteur d'entraînement (5) unique conformément à une séquence indiquée et un nombre.

9. Ensemble de déclenchement d'entraînement (6) selon l'une quelconque des revendications 1 à 8, **caractérisé en ce qu'**au moins le dispositif d'entraînement de tige (4b) du premier rotor (4) est en raccordement d'entraînement avec le second rotor (2).

10. Bloc de soupapes rotatif comprenant l'ensemble de déclenchement d'entraînement (6) tel que défini selon l'une quelconque des revendications 1 à 9, **caractérisé en ce qu'**il présente un logement d'orifice (9) créant une enceinte intérieure commune (18), protégée par un couvercle (20) doté d'au moins une soupape (8) disposée sensiblement de manière circonférentielle dans le logement (9), l'ensemble de déclenchement d'entraînement (6) étant fixé de sorte qu'un ou plusieurs doigt(s) d'actionnement (3) actionnent une ou plusieurs soupapes (8) et le couvercle (20) présentant un arbre fixe (20a), sur lequel le palier unidirectionnel (1) du second rotor (2) est placé.

11. Bloc de soupapes rotatif selon la revendication 10, **caractérisé en ce que** le logement (9) présente l'enceinte commune (18) pour l'ensemble de déclenchement d'entraînement (6), l'enceinte commune (18) est étanchéifiée avec un joint du logement (20b) disposé sous le couvercle (20).

12. Bloc de soupapes rotatif selon l'une quelconque des revendications 10 à 11, **caractérisé en ce que** le logement (9) présente une entrée (19) pour le milieu vers l'enceinte commune (18), le logement (9) présentant un ou plusieurs orifice(s) (21) dans une ou plusieurs enceinte(s) (17) pour au moins la soupape (8).

13. Bloc de soupapes rotatif selon l'une quelconque des revendications 10 à 12, **caractérisé en ce que** les soupapes sont disposées en agencement circulaire ou linéaire ou en agencement circulaire-linéaire.
